# EUROPEAN PATENT SPECIFICATION

(11) **EP 4 400 071 B1**
(45) Date of publication and mention of the grant of the patent: **31.12.2025**
(21) Application number: 23305031.9
(22) Date of filing: 10.01.2023
(51) Int. Cl.: A61C 7/00, A61C 7/14, A61C 7/20

(54) **ORTHODONTIC DEVICE FOR THE INSTALLATION OF AN ORTHODONTIC APPARATUS AND ASSOCIATED MANUFACTURING METHOD**
ORTHODONTISCHE VORRICHTUNG ZUR INSTALLATION EINER ORTHODONTISCHEN VORRICHTUNG UND ZUGEHÖRIGES HERSTELLUNGSVERFAHREN
DISPOSITIF ORTHODONTIQUE POUR L'INSTALLATION D'UN APPAREIL ORTHODONTIQUE ET PROCÉDÉ DE FABRICATION ASSOCIÉ

(43) Date of publication of application: 17.07.2024
(73) Proprietor: 3C, 93150 Le Blanc-Mesnil (FR)
(72) Inventor: CURIEL, Patrick, 92200 NEUILLY SUR SEINE (FR); VALAY, Fabrice, 75017 PARIS (FR); FAES, Jean-Baptiste, 75013 PARIS (FR); PETIT, Benjamin, 92300 LEVALLOIS PERRET (FR)
(74) Representative: Lavoix

(56) References cited:
- US-A1- 2016 346 063
- US-A1- 2017 325 911

## Description

The present invention relates to an orthodontic device, comprising : a dental jig, designed for being placed on a patient's upper or lower dental arch, the dental jig comprising : an inner surface, designed for being in contact with the dental arch ; and an outer surface, opposed to the inner surface ; a plurality of brackets, each bracket having a mating surface, designed for being fixed to a labial or lingual surface of a tooth of the dental arch ; and a plurality of connectors, each connector extending between a first and a second ends, the first end of each connector being attached to one of the brackets ; each of the brackets comprising a coupling element for being coupled to a dental archwire.

The invention particularly relates to the installation of an orthodontic apparatus situated on a lingual surface of the teeth, oriented toward the tongue. The invention also relates to the installation of an orthodontic apparatus situated on a labial surface of the teeth, oriented toward the lips.

By "orthodontic apparatus", it is meant an apparatus designed for exerting constraints and forces on the teeth of a patient, in order to move the teeth from an initial configuration, considered unsatisfying, to a corrected configuration. For example, the corrected configuration tends to improve an alignment of the teeth.

An orthodontic device of the aforementioned type, designed for an orthodontic apparatus situated on a labial surface of the teeth, is disclosed in document US2017/325911.

For a lingual apparatus, once the brackets are fixed to the teeth, the access to said brackets may be particularly difficult. More specifically, assembling a dental archwire to the bracket after fixation of said bracket is not always possible, depending on the initial position of the teeth.

Therefore, providing a ready-to-install orthodontic apparatus with a dental archwire already assembled to the brackets is of great interest.

Document US2016/0346063 discloses an orthodontic device of the aforementioned type, comprising a dental archwire assembled to the brackets. The jig is made one-piece with the brackets through breakable connectors.

However, in document US2016/0346063, the connectors need to be designed sufficiently thin to allow movements between the brackets during insertion of the archwire ; and between the jig and the brackets during the installation of the device in the mouth of a patient. Consequently, the forces exerted by the archwire may be high enough to shift the brackets during the fixation of said brackets on the teeth. The orthodontic apparatus is thus installed with insufficient precision.

The present invention aims to provide a ready-to-use orthodontic device with the dental archwire assembled to the brackets and allowing an accurate positioning of said brackets on the teeth during installation.

For this purpose, the invention relates to an orthodontic device of the aforementioned type, according to the features of claim 1.

According to preferred embodiments, the orthodontic device may include one or more of the following features, considered alone or in any technically possible combination:
- the coupling element of each of the brackets comprises a through hole for inserting the dental archwire into said bracket ;
- at least some of the brackets comprise grooves on the mating surface, said grooves being able to retain a fluid adhesive composition ;
- the inner surface of the dental jig is complementary with an occlusal surface of the dental arch ;
- the orthodontic device also comprises the dental archwire, able to be coupled to the coupling element of each of the brackets ;
- the orthodontic device also comprises a covering element, said covering element having a covering surface, complementary with an external surface of the brackets and/or connectors in the assembled state of the orthodontic device ;
- the dental archwire is coupled to the coupling element of each of the brackets ; and the orthodontic device is in the assembled state such that plug of the second end of each of the connectors is inserted in the corresponding cavity of the dental jig, the second end of each of said connectors being thus attached to said dental jig ;
- the covering surface of the covering element is in contact with the complementary, external surface of the brackets and/or connectors.

The invention also relates to a method for manufacturing the orthodontic device described above, comprising the following steps :
- creating a first CAD model of the patient's dental arch in a first, initial configuration; then
- on the basis of the first CAD model, creating a second CAD model of the patient's dental arch in a second, corrected configuration ; then
- on the basis of the first and second CAD models, creating a third CAD model of an orthodontic apparatus able to move the patient's dental arch from the first to the second configurations, said orthodontic apparatus comprising : the dental archwire ; and the plurality of brackets, each of the brackets comprising the mating surface and the coupling element for being coupled to the dental archwire ; then
- on the basis of the first and third CAD models, creating a fourth CAD model of the orthodontic device, comprising : the dental jig with the plurality of cavities, opening on the outer surface ; the plurality of brackets ; and the plurality of connectors, the first end of each connector being attached to one of the brackets ; the dental jig and the plurality of connectors being configured so that, when the plug of the second end of each of the connectors is inserted in the corresponding cavity of the dental jig, the mating surfaces of the plurality of brackets is complementary with the dental arch in the first, initial configuration ; then
- on the basis of the fourth CAD model, manufacturing : the dental jig with the plurality of cavities, opening on the outer surface; and the plurality of brackets and of connectors, the first end of each connector being attached to one of the brackets.

According to preferred embodiments, the method may include one or more of the following features, considered alone or in any technically possible combination:
- the dental jig and/or the plurality of brackets and of connectors are manufactured by additive manufacturing ;
- the method also comprises the following steps : on the basis of the third CAD model, manufacturing the dental archwire ; then coupling the dental archwire to the coupling element of each of the brackets ; then inserting the plug of the second end of each of the connectors in the corresponding cavity of the dental jig, by translation along the corresponding insertion axis, the second end of each of said connectors being thus attached to said dental jig ;
- the dental archwire is manufactured out of a shape memory material ;
- the method also comprises the following steps : on the basis of the fourth CAD model, creating a fifth CAD model of the covering element having the covering surface ; then on the basis of the fifth CAD model, manufacturing the covering element, preferably by additive manufacturing
- the method also comprises a step of placing the covering element so that the covering surface is in contact with the complementary, external surface of the brackets and/or connectors.

The invention will be easier to understand in view of the following description, provided solely as an example, and with reference to the appended drawings, wherein :
- Figure 1 shows an orthodontic device, according to an embodiment of the invention, in a dissociated state ;
- Figure 2 shows the orthodontic device of Figure 1 in an assembled state on a patient's dental arch ; and

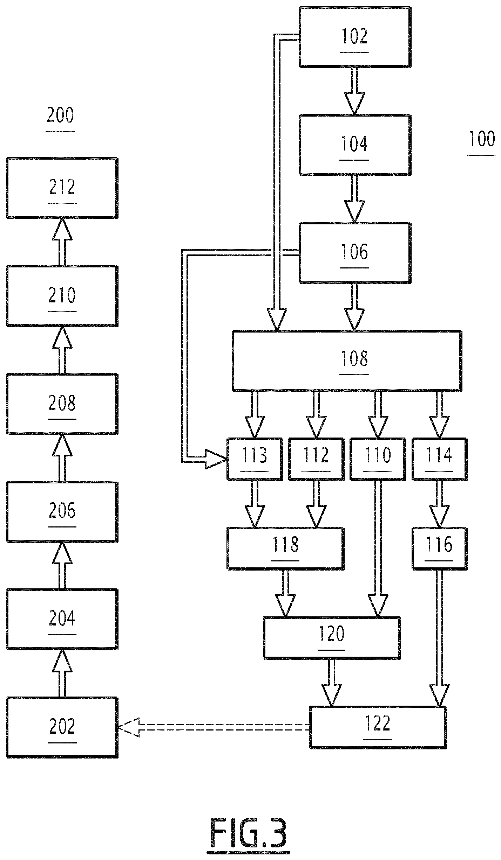

- Figure 3 is a logogram representation of a method for manufacturing the orthodontic device of Figures 1 and 2, according to an embodiment of the invention.

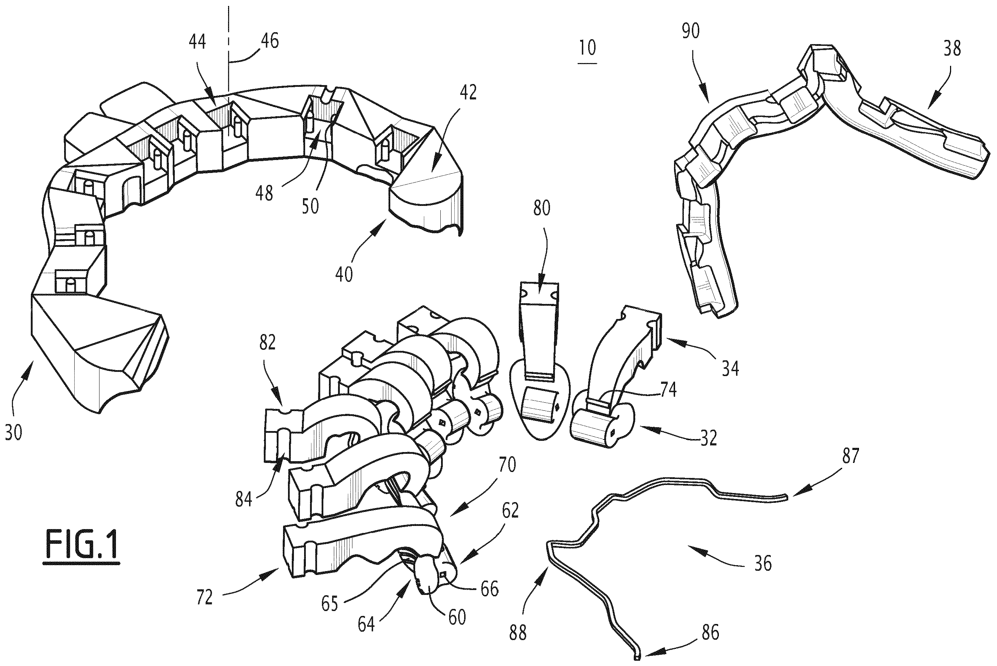

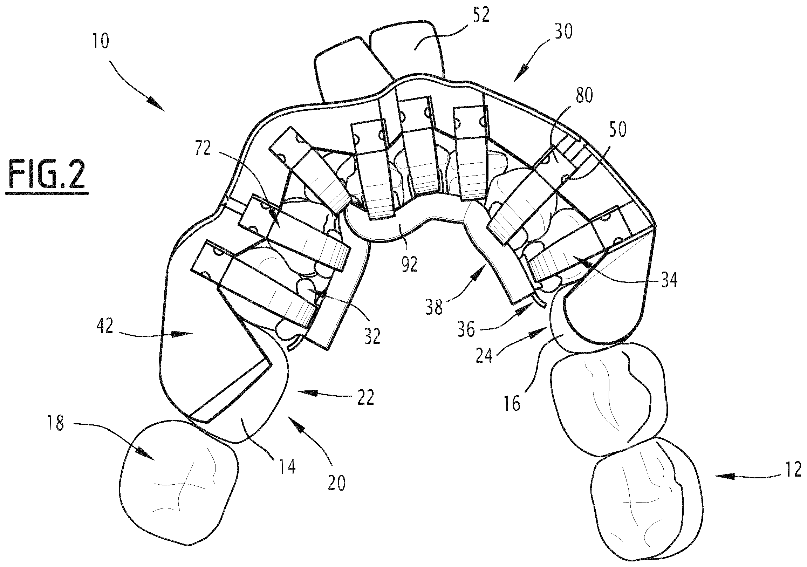

Figures 1 and 2 show an orthodontic device 10, according to an embodiment of the invention. The orthodontic device 10 is designed for installing an orthodontic apparatus on a patient's dental arch 12, shown on Figure 2. Said orthodontic apparatus is designed for moving said dental arch 12 from an initial configuration, shown on Figure 2, to a corrected configuration.

More precisely, the dental arch 12 comprises a plurality of teeth 14, 16. The positions of the teeth 14, 16 relative to each other are different in the initial and in the corrected configurations.

The dental arch 12 is a patient's upper or lower dental arch. In the shown embodiment, the dental arch 12 is a lower dental arch.

The dental arch 12 comprises : an occlusal surface 18, oriented toward the opposite dental arch ; an outer or labial surface, oriented toward the lips ; and an inner or lingual surface 20, oriented toward the tongue.

The orthodontic apparatus associated with the orthodontic device 10 is designed for being installed on the labial or lingual surface of the dental arch 12. In the shown embodiment, the orthodontic apparatus is designed for being installed on the lingual surface 20.

The lingual surface 20 of the dental arch 12 is formed of the lingual surfaces 22, 24 of the teeth 14, 16. As the teeth are positioned differently in the initial and in the corrected configurations, the lingual surface 20 has a different shape in said initial and corrected configurations.

As shown on Figure 1, the orthodontic device 10 comprises : a dental jig 30 ; a plurality of brackets 32 ; and a plurality of connectors 34. In the shown embodiment, the orthodontic device 10 also comprises a dental archwire 36 and a covering element 38.

The dental jig 30 is designed for being placed on the dental arch 12, more precisely on the occlusal surface 18. The dental jig has a curved shape, similar to the shape of the dental arch 12. More precisely, the dental jig 30 comprises : an internal surface 40, designed for being in contact with the dental arch ; and an external surface 42, opposed to the inner surface.

Preferably, the internal surface 40 is at least partially complementary with the occlusal surface 18 of the dental arch 12 in the initial configuration. Preferably, the external surface 42 is substantially planar.

The dental jig 30 also comprises a plurality of cavities 44, opening on the external surface 42. Each cavity 44 extends along an insertion axis 46. Preferably, each insertion axis 46 is substantially perpendicular to the external surface 42, or form an angle close to 90° with said outer surface.

Each cavity 44 comprises an inner surface 48 extending along the insertion axis 46. Advantageously, the inner surface 48 is an anti-rotation surface. In the shown embodiment, the inner surfaces 48 have a substantially square or rectangular section. Preferably, at least some of the inner surfaces 48 of the dental jig 30 comprise at least a rib 50, extending along the insertion axis 46 of the corresponding cavity.

In the shown embodiment, the dental jig 30 also comprises a gripping element 52, extending from the external surface 42 on the convex side of the curved shape.

Preferably, the dental jig 30 is made of a material suitable for additive manufacturing, such as a biocompatible composite resin. For example, a suitable resin is marketed under the tradename GC Temp Print^{™}.

Each of the brackets 32 comprises a mating element 60 and a coupling element 62, formed in one piece. The mating element 60 has two opposite surfaces. A first surface of the mating element 60 is a mating surface 64, designed for being fixed to a tooth 14, 16 of the dental arch. More precisely, a shape of the mating surface 64 is complementary with the lingual surface 22, 24 of one of the teeth 14, 16.

In the assembled state of the orthodontic device 10, shown on Figure 2, the mating surface 64 of each mating element 60 is fixed to the lingual surface 22, 24 of a tooth 14, 16 of the dental arch 12, said dental arch being in the initial configuration.

Preferably, the mating surfaces 64 are designed for being fixed to the teeth by an adhesive. More preferably, at least some of the mating surface comprise grooves 65, able to retain a quantity of adhesive.

The coupling element 62 extends from a second surface of the mating element 60, opposite to the mating surface 64. The coupling element 62 preferably has a domed shape, designed for being oriented toward the tongue of the patient.

Each of the coupling elements 62 is designed for being coupled to the dental archwire 36. In the shown embodiment, each of the coupling elements 62 comprises a transversal through hole 66 allowing the insertion of the dental archwire 36. A section of each of the through holes 66 is preferably similar with a section of the dental archwire 36. The dental archwire 36 will be further described below.

Each of the connectors 34 extends between a first 70 and a second 72 ends. The first end 70 of each connector is attached to one of the brackets 32. Preferably, the first end 70 of each connector is attached to the second surface of the mating element 60.

According to the invention each connector 34 is made in one piece with the corresponding bracket 32.

The first end 70 of the connector 34 is designed for being separated from the corresponding bracket 32 after said bracket is fixed to the corresponding tooth 14, 16, as detailed below. Preferably, the first end 70 of at least some of the connectors 34 comprises a rib 74, indicating a cutting place.

The second end 72 of each connector comprises a plug 80. Each plug is designed for being inserted into a corresponding cavity 44 of the dental jig 30, so as to attach each connector 34 to the dental jig.

More precisely, each plug 80 has an outer surface 82, complementary with the inner surface 48 of the corresponding cavity 44 of the dental jig. Preferably, the outer surface 82 is an anti-rotation surface cooperating with the anti-rotation inner surface 48.

The inner 48 and outer 82 surfaces are configured so as to insert each plug 80 in the corresponding cavity 44 by translation along the corresponding insertion axis 46.

Preferably, at least some of the outer surfaces 82 comprise at least a groove 84, able to slide along a corresponding rib 50 of the corresponding inner surface 48.

In the assembled state of the orthodontic device 10, shown on Figure 2, the plug 80 of the second end 72 of each connector 34 is inserted in the corresponding cavity 44 of the dental jig 30. More precisely, in the assembled state, each rib 50 of an inner surface 48 is inserted in a corresponding groove 84 of the corresponding outer surface 82.

As detailed below, each of the connectors 34 has a particular shape between the first 70 and second 72 ends. The shape of each connector is designed individually, in relation with the assembled state of the orthodontic device 10.

More precisely, as detailed below, the shape of each connector 34 is designed for applying the corresponding bracket 32 on the lingual surface 22, 24 of the corresponding tooth. Accordingly, the connector 34 preferably has a curved shape between the first 70 and second 72 ends, a convexity of the curved shape being designed for an orientation toward the tongue.

In an embodiment, a concave side of at least some of the connectors 34 is shaped complementarily to the corresponding tooth 14, 16 so that, in the assembled state of the orthodontic device 10, said concave side of the connector mates with the corresponding tooth.

Preferably, each bracket 32 and corresponding connector 34 are made of a material suitable for additive manufacturing such as a biocompatible composite resin. For example, a suitable resin is marketed under the tradename GC Temp Print^{™}.

The dental archwire 36 extends between a first 86 and a second 87 ends. Preferably, a section of the dental archwire 36 is substantially constant between the first and second ends. As indicated above, said section is preferably similar to a section of the through holes 66 of the coupling elements 62 of the brackets 32. In the shown embodiment, the section of the dental archwire 36 has an anti-rotation shape such as a square or rectangular shape. In another embodiment (not shown), the section of the dental archwire 36 is circular.

Preferably, the dental archwire 36 is made out of a shape memory material. More preferably, the dental archwire 36 is made out of a shape memory metal, such as nickel titanium also known as nitinol. A suitable method for manufacturing the dental archwire 36 is disclosed in European application EP22183380.9, not yet published.

In the assembled state of the orthodontic device 10, shown on Figure 2, the dental archwire 36 is inserted in the through holes 66 of the coupling elements 62 of the brackets 32.

On Figures 1 and 2, the dental archwire 36 is shown in a same constrained configuration, corresponding to the orthodontic device 10 being assembled to the dental arch 12 in the initial configuration. As detailed below, the shape memory properties of the dental archwire 36 tend to move the teeth 14, 16 of the dental arch 12 from the initial configuration to the corrected configuration.

In particular, the dental archwire 36 comprises bends 88 or folds, allowing flexion and/or traction constraints to be exerted on said dental archwire when assembled to the brackets 32, as detailed below.

The covering element 38 has a curved shape, similar to a shape of the dental arch 12. In the shown embodiment, the curved shape of the covering element 38 is similar to a shape of the lingual surface 20.

The covering element 38 has a covering surface 90, complementary with an external surface of the brackets 32 and/or connectors 34 in the assembled state of the orthodontic device 10.

Preferably, the covering surface 90 is complementary with a part of the mating elements 60 and/or coupling elements 62 of the brackets 32 in the assembled state. More preferably, the covering surface 90 is also complementary with a part of the first ends 70 of the connectors 34 in the assembled state.

Accordingly, in the assembled state of the orthodontic device 10, shown on Figure 2, the covering surface 90 of the covering element is in contact with the complementary, external surface of the brackets 32 and/or connectors 34.

The covering element also has a lingual surface 92, opposed to the covering surface 90. The lingual surface 92 is preferably smooth and rounded. A tightness of the covering element 38, between the covering 90 and lingual 92 surfaces, is designed for ensuring a rigidity of the covering element against forced exerted by the dental archwire 36, as detailed below.

Preferably, the covering element 38 is made of a material suitable for additive manufacturing such as a biocompatible composite resin. For example, a suitable resin is marketed under the tradename Mack4D^{™}.

In an embodiment, the orthodontic device 10 also comprises a maintaining element (not shown) of similar shape as the covering element 38. In particular, the maintaining element comprises the curve-shaped covering surface 90 formed on a periphery of a plate. As described below, such a maintaining element may be used for a transportation of the orthodontic device 10, before installation in the mouth of a patient.

A method 100 for manufacturing the orthodontic device 10 will now be described.

In a first step, a first computer-aided design (CAD) model 102 of the patient's dental arch 12 in the initial configuration is created, for example by scanning the corresponding jaw of the patient.

Then, on the basis of the first CAD model 102, a second CAD model 104 of the patient's dental arch in the corrected configuration is created, using an appropriate software. The second CAD model 104 is designed so that the teeth of the dental arch are suitably aligned. In other terms, in the second CAD model 104, a shape of the lingual surface of the dental arch is different from the shape of the corresponding lingual surface 20 in the first CAD model 102.

Then, on the basis of the first 102 and second 104 CAD models, a third CAD model 106 of an orthodontic apparatus is created. The orthodontic apparatus of the third CAD model 106 comprises : a dental archwire corresponding to the dental archwire 36 described above ; and a plurality of brackets, corresponding to the plurality of brackets 32 described above. In particular, each of the brackets of the third CAD model 106 comprises a coupling element, so that the brackets and the dental archwire of the third CAD model 106 are coupled with each other. In the same manner, each of the brackets of the third CAD model 106 has a mating surface complementary with a lingual surface of a tooth of the dental arch.

The third CAD model 106 is designed for featuring an orthodontic apparatus able to move the patient's dental arch 12 from the initial configuration to the corrected configuration.

Then, on the basis of the first and third CAD models, a fourth CAD model 108 is created, featuring the orthodontic device 10 described above.

The fourth CAD model 108 features at least the dental jig 30, the plurality of brackets 32 and the plurality of connectors 34 described above. Optionally, the fourth CAD model 108 also features the dental archwire 36 and/or the covering element 38.

In the fourth CAD model 108, the dental jig 30 and the plurality of connectors 34 are designed and configured so that, in an assembled configuration of the orthodontic device 10, such as shown on Figure 2 and described above, the mating surfaces 62 of the plurality of brackets 32 is complementary with the lingual surface 20 of the dental arch 12 in the initial configuration. In particular, the shapes of the cavities 44 and plugs 80 are designed accordingly, as well as the shape of each connector 34 between the first 70 and second 72 ends.

Then, on the basis of the fourth CAD model 108, the dental jig 30 is manufactured (step 110) by computer-controlled manufacturing. Preferably, the dental jig 30 is manufactured by additive manufacturing such as 3D-printing.

In parallel, on the basis of the fourth CAD model 108, each bracket 32 and corresponding connector 34 are manufactured in one piece (step 112) by computer-controlled manufacturing. Preferably, the brackets 32 and connectors 34 are manufactured by additive manufacturing such as 3D-printing.

In parallel, on the basis of the third CAD model 106, the dental archwire 36 is manufactured (step 113) by an appropriate method, as indicated above.

Optionally, on the basis of the fourth CAD model 108, a fifth CAD model 114 of the covering element 38, having the covering surface 90, is created. Then, on the basis of the fifth CAD model 114, the covering element 38 is manufactured (step 116) by computer-controlled manufacturing such as 3D-printing.The orthodontic device 10, in the dissociated state of figure 1, is thus obtained.

Optionally, on the basis of the first CAD model 102, a solid model of the dental arch 12, known as a typodont, is also manufactured by computer-controlled manufacturing.

Then, the dental archwire 36 is coupled to the coupling element 62 of each of the brackets 32 (step 118). In the shown embodiment, the first 86 or second 87 end is successively inserted in the through holes 66 of the coupling elements 62, in an appropriate order. As the connectors 34 are dissociated from the jig 30, the brackets 32 are free to move relative to each other. Therefore, the assembling of the dental archwire 36 with the brackets is facilitated. In particular, each bracket 32 is able to slide along the bends 88 of the dental archwire 36 so as to reach an appropriate location along said archwire.

After the coupling step 118 described above, the dental archwire 36 is in a low-constraint configuration, the brackets 32 being free to move relative to each other.

Then, the plug 80 of the second end 72 of each connector 34 is inserted in the corresponding cavity 44 of the dental jig (step 120), each of said connectors being thus attached to said dental jig. The dental archwire 36 is then in a high-constraint configuration. In particular, flexion and/or traction constraints are exerted by the brackets 32 on the bends 88 of the dental archwire.

Optionally, the device is then installed on the typodont so as to adjust the position of the dental archwire 36 in the brackets 32, at an optimal position.

Then, the covering element 38 is assembled to the complementary, external surface of the brackets 32 and/or connectors 34 (step 122). Alternatively, the maintaining element described above is used in place of the covering element 38.

The orthodontic device 10, in the assembled state, is thus obtained. The orthodontic device 10 is ready to be used or to be delivered to a practitioner or patient. In particular, the orthodontic device 10 can be delivered with the dental archwire 36 already assembled to the brackets 32.

A method 200 for implementing the orthodontic device 10, obtained by the method 100 described above, will now be described.

First (step 202), a fluid adhesive composition is applied on the mating surfaces 64 of the brackets 32 and/or on the lingual surfaces 22, 24 of the teeth of the patient. Preferably, the fluid adhesive composition is retained in the grooves 65 of the mating surfaces 64.

Then (step 204), the covering element 38 or the maintaining element is removed from the brackets 32 and connectors 34.

Then (step 206), the internal surface 40 of the jig 30 is placed on the occlusal surface 18 of the dental arch. Each bracket 32 is positioned on the appropriate tooth.

Then (step 208), the covering element 38 is assembled to the complementary, external surface of the brackets 32 and/or connectors 34.

The orthodontic device 10, assembled to the dental arch 12 as shown on Figure 2, is thus obtained.

The connectors 34, especially the first ends 70, are designed with sufficient tightness and rigidity to resist to the forces exerted on the brackets 32 by the shape-memory dental archwire 36. The covering element 38, in contact with the brackets 32 and/or connectors 34, contributes to maintaining the orthodontic device 10 in the suitable position during the curing of the adhesive composition (step 210). Accordingly, the orthodontic device 10 is fixed to the dental arch 12 with a precise position of each bracket 32 on the corresponding tooth 14, 16.

Then, the covering element 38 is removed ; and the first ends 70 of the connectors 34 are detached from the corresponding brackets 32 (step 212), for example by cutting each of said first ends along the corresponding rib 74.

The orthodontic apparatus, formed by the dental archwire 36 and brackets 32, is thus obtained in a fixed state on the dental arch 12. The connectors 34 and jig 30 being removed, the shape-memory dental archwire 36 is able to exert forces on the brackets 32 so as to move the teeth of the dental arch 12 from the initial configuration to the corrected configuration.

## Claims

1. Orthodontic device (10), comprising :
- a dental jig (30), designed for being placed on a patient's upper or lower dental arch (12), the dental jig comprising : an internal surface (40), designed for being in contact with the dental arch ; and an external surface (42), opposed to the internal surface ;
- a plurality of brackets (32), each bracket having a mating surface (64), designed for being fixed to a labial or lingual surface (22, 24) of a tooth (14, 16) of the dental arch ; and
- a plurality of connectors (34), each connector extending between a first (70) and a second (72) end, the first end of each connector being made one-piece with one of the brackets ;
each of the brackets comprising a coupling element (62) for being coupled to a dental archwire (36) ;
- the dental jig comprising a plurality of cavities (44), opening on the external surface ; each cavity comprising an inner surface (48) extending along an insertion axis (46) ;
- the second end of each of the connectors comprising a plug (80) having an outer surface (82), complementary with the inner surface (48) of a corresponding cavity of the dental jig ;
the second end of each of the connectors being configured for being attached to the dental jig by inserting the plug into the corresponding cavity, by translation along the insertion axis (46), so that the orthodontic device is in an assembled state;
the orthodontic device being configured so that, when the connectors (34) are dissociated from the dental jig (30), the brackets (32) are free to move relative to each other.

2. Orthodontic device according to claim 1, wherein the coupling element (62) of each of the brackets comprises a through hole (66) for inserting the dental archwire into said bracket.

3. Orthodontic device according to claim 1 or claim 2, wherein at least some of the brackets (32) comprise grooves (65) on the mating surface (64), said grooves being able to retain a fluid adhesive composition.

4. Orthodontic device according to one of the preceding claims, also comprising the dental archwire (36), able to be coupled to the coupling element (62) of each of the brackets (32).

5. Orthodontic device according to one of the preceding claims, also comprising a covering element (38), said covering element having a covering surface (90), complementary with an external surface of the brackets (32) and/or connectors (34) in the assembled state of the orthodontic device.

6. Orthodontic device according to claim 4 or 5, wherein when the dental archwire (36) is coupled to the coupling element (62) of each of the brackets and the orthodontic device is in the assembled state such that each plug (80) of the second end of each of the connectors (34) is inserted in the corresponding cavity (44) of the dental jig (30), the second end (72) of each of said connectors being thus attached to said dental jig.

7. Orthodontic device according to claim 5 combined with claim 6, wherein the covering surface (90) of the covering element is adapted to be in contact with the complementary, external surface of the brackets (32) and/or connectors (34).

8. Method for manufacturing an orthodontic device according to one of the preceding claims, comprising the following steps :
- creating a first CAD model (102) of the patient's dental arch in a first, initial configuration; then
- on the basis of the first CAD model, creating a second CAD model (104) of the patient's dental arch in a second, corrected configuration ; then
- on the basis of the first and second CAD models, creating a third CAD model (106) of an orthodontic apparatus able to move the patient's dental arch (12) from the first to the second configurations, said orthodontic apparatus comprising : the dental archwire (36) ; and the plurality of brackets (32), each of the brackets comprising the mating surface (64) and the coupling element (62) for being coupled to the dental archwire ; then
- on the basis of the first and third CAD models, creating a fourth CAD model (108) of the orthodontic device, comprising : the dental jig (30) with the plurality of cavities (44), opening on the outer surface ; the plurality of brackets (32) ; and the plurality of connectors (34), the first end (70) of each connector being attached to one of the brackets ;
the dental jig and the plurality of connectors being configured so that, when the plug (80) of the second end of each of the connectors is inserted in the corresponding cavity (44) of the dental jig, the mating surfaces (64) of the plurality of brackets are complementary with the dental arch (12) in the first, initial configuration ; then
- on the basis of the fourth CAD model, manufacturing (110, 112) : the dental jig (30) with the plurality of cavities, opening on the external surface; and the plurality of brackets (32) and of connectors (34), the first end of each connector being attached to one of the brackets.

9. Method according to claim 8, wherein the dental jig (30) and/or the plurality of brackets (32) and of connectors (34) are manufactured by additive manufacturing.

10. Method according to claim 8 or 9, for manufacturing an orthodontic device according to claim 5, also comprising the following steps :
- on the basis of the third CAD model, manufacturing (113) the dental archwire (36) ; then
- coupling the dental archwire to the coupling element (62) of each of the brackets ; then
- inserting the plug (80) of the second end of each of the connectors in the corresponding cavity (44) of the dental jig, by translation along the corresponding insertion axis (46), the second end of each of said connectors being thus attached to said dental jig.

11. Method according to claim 10, wherein the dental archwire (36) is manufactured out of a shape memory material.

12. Method according to claim 10 or 11, for manufacturing an orthodontic device according to claim 5, also comprising the following steps :
- on the basis of the fourth CAD model, creating a fifth CAD model (114) of the covering element (38) having the covering surface (90) ; then
- on the basis of the fifth CAD model, manufacturing (116) the covering element, preferably by additive manufacturing.

13. Method according to claim 12, for manufacturing an orthodontic device according to claim 7, also comprising a step of placing the covering element (38) so that the covering surface (90) is in contact with the complementary, external surface of the brackets (32) and/or connectors (34).

## Patentansprüche

1. Kieferorthopädische Vorrichtung (10), umfassend:
- eine zahnärztliche Schiene (30), die konstruiert ist, um auf dem oberen oder unteren Zahnbogen (12) eines Patienten platziert zu werden, die zahnärztliche Schiene umfassend: eine Innenfläche (40), die konstruiert ist, um mit dem Zahnbogen in Kontakt zu sein; und eine Außenfläche (42) gegenüber der Innenfläche;
- eine Vielzahl von Klammern (32), wobei jede Klammer eine Gegenfläche (64) aufweist, die konstruiert ist, um an einer labialen oder lingualen Fläche (22, 24) eines Zahns (14, 16) des Zahnbogens befestigt zu werden; und
- eine Vielzahl von Verbindern (34), wobei sich jeder Verbinder zwischen einem ersten (70) und einem zweiten (72) Ende erstreckt,
das erste Ende von jedem Verbinder einteilig mit einer der Klammern ausgeführt ist;
jede der Klammern umfassend ein Kupplungselement (62) zum Koppeln mit einem Bogen (36);
- die zahnärztliche Schiene umfassend
eine Vielzahl von Hohlräumen (44), die sich an der Außenfläche öffnen;
jeder Hohlraum umfassend eine Innenfläche (48), die sich entlang einer Einführachse (46) erstreckt;
- das zweite Ende von jedem der Verbinder umfassend
- einen Stopfen (80), der eine
Außenfläche (82) aufweist, die mit der Innenfläche (48) eines entsprechenden Hohlraums der zahnärztlichen Schiene komplementär ist;
das zweite Ende jedes Verbinders konfiguriert ist, um an der zahnärztlichen Schiene durch Einsetzen des Stopfens in den entsprechenden Hohlraum durch Verschieben entlang der Einsetzachse (46) befestigt zu werden, sodass die kieferorthopädische Vorrichtung in einem zusammengesetzten Zustand ist;
wobei die kieferorthopädische Vorrichtung konfiguriert ist, sodass die Klammern (32) in Bezug aufeinander frei beweglich sind, wenn die Verbinder (34) von der zahnärztlichen Schiene (30) gelöst sind.

2. Kieferorthopädische Vorrichtung nach Anspruch 1, wobei das Verbindungselement (62) jeder der Klammern ein Durchgangsloch (66) zum Einführen des Zahnbogens in die Klammer aufweist.

3. Kieferorthopädische Vorrichtung nach Anspruch 1 oder Anspruch 2, wobei zumindest einige der Klammern (32) Rillen (65) auf der Gegenfläche (64) umfassen, die in der Lage sind, eine flüssige Klebstoffzusammensetzung aufzunehmen.

4. Kieferorthopädische Vorrichtung nach einem der vorherigen Ansprüche, auch umfassend den Bogen (36), der in der Lage ist, mit dem Kupplungselement (62) von jeder der Klammern (32) gekoppelt zu werden.

5. Kieferorthopädische Vorrichtung nach einem der vorherigen Ansprüche, auch umfassend ein Abdeckelement (38), wobei das Abdeckelement eine Abdeckfläche (90) aufweist, die in dem zusammengebauten Zustand der kieferorthopädischen Vorrichtung komplementär zu einer Außenfläche der Klammern (32) und/oder Verbinder (34) ist.

6. Kieferorthopädische Vorrichtung nach Anspruch 4 oder 5, **dadurch gekennzeichnet, dass** wenn der Bogen (36) mit dem Kupplungselement (62) von jeder der Klammern gekoppelt ist und die kieferorthopädische Vorrichtung in dem zusammengebauten Zustand ist, sodass jeder Stecker (80) des zweiten Endes jedes der Verbinder (34) in den entsprechenden Hohlraum (44) der zahnärztlichen Schiene (30) eingesetzt ist, das zweite Ende (72) von jedem der Verbinder somit an der zahnärztlichen Schiene angebracht ist.

7. Kieferorthopädische Vorrichtung nach Anspruch 5 in Verbindung mit Anspruch 6, **dadurch gekennzeichnet, dass** die Abdeckfläche (90) des Abdeckelements angepasst ist, um
in Kontakt mit der komplementären, externen
Oberfläche der Klammern (32) und/oder Verbinder (34) zu sein.

8. Verfahren zum Herstellen einer kieferorthopädischen Vorrichtung nach einem der vorherigen Ansprüche, umfassend die folgenden Schritte:
- Erstellen eines ersten CAD-Modells (102) des Zahnbogens des Patienten in einer ersten, anfänglichen Konfiguration; dann
- auf Grundlage des ersten CAD-Modells, Erstellen eines zweiten CAD-Modells (104) des Bogens des Patienten in einer zweiten, korrigierten Konfiguration; dann
- auf Grundlage des ersten und des zweiten CAD-Modells, Erstellen eines dritten CAD-Modells (106) einer kieferorthopädischen Vorrichtung, die in der Lage ist, den Zahnbogen (12) des Patienten von der ersten in die zweite Konfiguration zu bewegen, wobei die kieferorthopädische Vorrichtung Folgendes umfasst: den Bogen (36); und die Vielzahl von Klammern (32), wobei jede der Klammern die Passfläche (64) und das Kopplungselement (62) umfasst, um mit dem Zahnbogen gekoppelt zu werden; dann
- auf Grundlage des ersten und des dritten CAD-Modells- Erstellen eines vierten CAD-Modells (108) der kieferorthopädischen Vorrichtung, umfassend: die zahnmedizinische Schiene (30) mit der Vielzahl von Hohlräumen (44), die sich an der Außenfläche öffnen; die Vielzahl von Klammern (32); und die Vielzahl von Verbindern (34), wobei das erste Ende (70) jedes Verbinders an einer der Klammern angebracht ist;
wobei die zahnärztliche Schiene und die Vielzahl von Verbindern konfiguriert sind, sodass, wenn der Stopfen (80) des zweiten Endes von jedem der Verbinder in den entsprechenden Hohlraum (44) der zahnärztlichen Schiene eingeführt wird, die zusammenpassenden Oberflächen (64) der Vielzahl von Klammern komplementär zu dem Zahnbogen (12) in der ersten, ursprünglichen Konfiguration sind; dann
- auf Grundlage des vierten CAD-Modells Herstellen (110, 112) von Folgendem: der zahnärztlichen Schiene (30) mit der Vielzahl von Hohlräumen, die sich an der Außenfläche öffnen; und der Vielzahl von Klammern (32) und von Verbindern (34), wobei das erste Ende von jedem Verbinder an einer der Klammern angebracht ist.

9. Verfahren nach Anspruch 8, wobei die zahntechnische Schiene (30) und/oder die Vielzahl von Klammern (32) und der Verbinder (34) durch additive Fertigung hergestellt werden.

10. Verfahren nach Anspruch 8 oder 9 zur Herstellung einer kieferorthopädischen Vorrichtung nach Anspruch 5, auch umfassend die folgenden Schritte:
- auf Grundlage des dritten CAD-Modells, Herstellen (113) des Bogens (36); dann
- Koppeln des Bogens mit dem Kopplungselement (62) von jeder der Klammern; dann
- Einsetzen des Stopfens (80) des zweiten Endes von jedem der Verbinder in den entsprechenden Hohlraum (44) der zahnärztlichen Schiene durch Verschieben entlang der entsprechenden Einsetzachse (46), wobei das zweite Ende von jedem der Verbinder somit an der zahnärztlichen Schiene angebracht ist.

11. Verfahren nach Anspruch 10, wobei der Bogen (36) aus einem Formgedächtnismaterial hergestellt ist.

12. Verfahren nach Anspruch 10 oder 11 zur Herstellung einer kieferorthopädischen Vorrichtung nach Anspruch 5, auch umfassend die folgenden Schritte:
- auf Grundlage des vierten CAD-Modells, Erstellen eines fünften CAD-Modells (114) des Abdeckelements (38), das die Abdeckfläche (90) aufweist; dann
- auf Grundlage des fünften CAD-Modells, Herstellen (116) des Abdeckelements, vorzugsweise durch additive Fertigung.

13. Verfahren nach Anspruch 12 zur Herstellung einer kieferorthopädischen Vorrichtung nach Anspruch 7, auch umfassend einen Schritt, bei dem das Abdeckelement (38) platziert wird, sodass die Abdeckfläche (90) in Kontakt mit der komplementären Außenfläche der Klammern (32) und/oder Verbinder (34) ist.

## Revendications

1. Dispositif orthodontique (10), comprenant :
- un gabarit dentaire (30), conçu pour être placé sur l'arcade dentaire supérieure ou inférieure (12) d'un patient, le gabarit dentaire comprenant : une surface interne (40), conçue pour être en contact avec l'arcade dentaire ; et une surface externe (42), opposée à la surface interne ;
- une pluralité d'attaches (32), chaque attache ayant une surface de contact (64), conçue pour être fixée à une surface labiale ou linguale (22, 24) d'une dent (14, 16) de l'arcade dentaire ; et
- une pluralité de connecteurs (34), chaque connecteur s'étendant entre une première (70) et une seconde (72) extrémité,
la première extrémité de chaque connecteur étant monobloc avec l'une des attaches ;
chacune des attaches comprenant un élément de couplage (62) destiné à être couplé à un arc dentaire (36) ;
- le gabarit dentaire comprenant
une pluralité de cavités (44), s'ouvrant sur la surface externe ;
chaque cavité comprenant une surface intérieure (48) s'étendant le long d'un axe d'insertion (46) ;
- la seconde extrémité de chacun des connecteurs comprenant
- un bouchon (80) ayant une surface
extérieure (82), complémentaire de la surface intérieure (48) d'une cavité correspondante du gabarit dentaire ;
la seconde extrémité de chacun des connecteurs étant configurée pour être attachée au gabarit dentaire par insertion du bouchon dans la cavité correspondante, par translation le long de l'axe d'insertion (46), de sorte que le dispositif orthodontique se trouve dans un état assemblé ;
le dispositif orthodontique étant configuré de sorte que, lorsque les connecteurs (34) sont dissociés du gabarit dentaire (30), les attaches (32) sont libres de se déplacer les unes par rapport aux autres.

2. Dispositif orthodontique selon la revendication 1, dans lequel l'élément de couplage (62) de chacune des attaches comprend un trou traversant (66) pour l'insertion de l'arc dentaire dans ladite attache.

3. Dispositif orthodontique selon la revendication 1 ou la revendication 2, dans lequel au moins certaines des attaches (32) comprennent des rainures (65) sur la surface de contact (64), lesdites rainures pouvant retenir une composition adhésive fluide.

4. Dispositif orthodontique selon l'une des revendications précédentes, comprenant également l'arc dentaire (36), pouvant être couplé à l'élément de couplage (62) de chacune des attaches (32).

5. Dispositif orthodontique selon l'une des revendications précédentes, comprenant également un élément de recouvrement (38), ledit élément de recouvrement ayant une surface de recouvrement (90), complémentaire d'une surface externe des attaches (32) et/ou des connecteurs (34) à l'état assemblé du dispositif orthodontique.

6. Dispositif orthodontique selon la revendication 4 ou 5, dans lequel lorsque l'arc dentaire (36)
est couplé à l'élément de couplage (62) de chacune des attaches et que le dispositif orthodontique
est dans l'état assemblé de telle sorte que chaque
bouchon (80) de la seconde extrémité de chacun des connecteurs (34) soit inséré dans la cavité (44) correspondante du gabarit dentaire (30), la seconde extrémité (72) de chacun desdits connecteurs étant ainsi attachée audit gabarit dentaire.

7. Dispositif orthodontique selon la revendication 5 combinée à la revendication 6, dans lequel la surface de recouvrement (90) de l'élément de recouvrement est adaptée pour être
en contact avec la surface complémentaire externe
des attaches (32) et/ou des connecteurs (34).

8. Procédé pour fabriquer un dispositif orthodontique selon l'une des revendications précédentes, comprenant les étapes suivantes :
- la création d'un premier modèle CAO (102) de l'arcade dentaire du patient dans une première configuration initiale ; puis
- sur la base du premier modèle CAO, la création d'un deuxième modèle CAO (104) de l'arcade dentaire du patient dans une seconde configuration, corrigée ; puis
- sur la base des premier et deuxième modèles CAO, la création d'un troisième modèle CAO (106) d'un appareil orthodontique capable de déplacer l'arcade dentaire (12) du patient de la première à la seconde configuration, ledit appareil orthodontique comprenant : l'arc dentaire (36) ; et la pluralité d'attaches (32), chacune des attaches comprenant la surface de contact (64) et l'élément de couplage (62) destiné à être couplé à l'arc dentaire ; puis
- sur la base des premier et troisième modèles CAO, la création d'un quatrième modèle CAO (108) du dispositif orthodontique, comprenant : le gabarit dentaire (30) avec la pluralité de cavités (44), s'ouvrant sur la surface extérieure ; la pluralité d'attaches (32) ; et la pluralité de connecteurs (34), la première extrémité (70) de chaque connecteur étant attachée à l'une des attaches ;
le gabarit dentaire et la pluralité de connecteurs étant configurés de sorte que, lorsque le bouchon (80) de la seconde extrémité de chacun des connecteurs est inséré dans la cavité (44) correspondante du gabarit dentaire, les surfaces de contact (64) de la pluralité d'attaches sont complémentaires de
l'arcade dentaire (12) dans la première configuration initiale ; puis
- sur la base du quatrième modèle CAO, la fabrication (110,112) : du gabarit dentaire (30) avec la pluralité de cavités, s'ouvrant sur la surface externe ; et de la pluralité d'attaches (32) et de connecteurs (34), la première extrémité de chaque connecteur étant attachée à l'une des attaches.

9. Procédé selon la revendication 8, dans lequel le gabarit dentaire (30) et/ou la pluralité d'attaches (32) et de connecteurs (34) sont fabriqués par fabrication additive.

10. Procédé selon la revendication 8 ou 9, pour fabriquer un dispositif orthodontique selon la revendication 5, comprenant également les étapes suivantes :
- sur la base du troisième modèle CAO, la fabrication (113) de l'arc dentaire (36) ; puis
- le couplage de l'arc dentaire à l'élément de couplage (62) de chacune des attaches ; puis
- l'insertion du bouchon (80) de la seconde extrémité de chacun des connecteurs dans la cavité (44) correspondante du gabarit dentaire, par translation le long de l'axe d'insertion (46) correspondant, la seconde extrémité de chacun desdits connecteurs étant ainsi attachée audit gabarit dentaire.

11. Procédé selon la revendication 10, dans lequel l'arc dentaire (36) est fabriqué à partir d'un matériau à mémoire de forme.

12. Procédé selon la revendication 10 ou 11, pour fabriquer un dispositif orthodontique selon la revendication 5, comprenant également les étapes suivantes :
- sur la base du quatrième modèle CAO, la création d'un cinquième modèle CAO (114) de l'élément de recouvrement (38) possédant la surface de recouvrement (90) ; puis
- sur la base du cinquième modèle CAO, la fabrication (116) de l'élément de recouvrement, de préférence par fabrication additive.

13. Procédé selon la revendication 12, pour fabriquer un dispositif orthodontique selon la revendication 7, comprenant également une étape de placement de l'élément de recouvrement (38) de sorte que la surface de recouvrement (90) soit en contact avec la surface complémentaire externe des attaches (32) et/ou des connecteurs (34).
